(19) Europäisches Patentamt
European Patent Office
Office européen des brevets

(11) **EP 2 657 726 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(51) Int Cl.:
***G01V 3/10*** *(2006.01)*

(21) Anmeldenummer: **13001618.1**

(22) Anmeldetag: **28.03.2013**

(54) **Elektromagnetisches Leitfähigkeitsmesssystem mit verbesserter Driftkorrektur**

Electromagnetic conductivity measurement system with improved drift correction

Conductomètre électromagnétique avec correction de dérive améliorée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2012 DE 102012008194**

(43) Veröffentlichungstag der Anmeldung:
**30.10.2013 Patentblatt 2013/44**

(73) Patentinhaber: **Forschungszentrum Jülich GmbH 52425 Jülich (DE)**

(72) Erfinder:
• **Mester, Achim**
  **52399 Merzenich (DE)**
• **Zimmermann, Egon**
  **52459 Inden (DE)**
• **Van Der Kruk, Jan**
  **52428 Jülich (DE)**
• **Glaas, Walter**
  **50189 Elsdorf (DE)**
• **Berwix, Joachim**
  **52428 Jülich (DE)**
• **Wolters, Bernd**
  **52428 Jülich (DE)**

(56) Entgegenhaltungen:
DE-A1-102009 026 403    DE-T2- 3 887 336
US-A1- 2009 201 024

**Beschreibung**

Die Erfindung betrifft ein Verfahren zur elektromagnetischen Messung der elektrischen Leitfähigkeit eines Mediums.

Stand der Technik

In der Geophysik werden seit etwa 30 Jahren zur Messung der elektrischen Leitfähigkeit des oberflächennahen Bodenbereiches bis ca. 50 m Tiefe Geräte auf Basis des elektromagnetischen Induktionsprinzips eingesetzt. Dazu wird ein Wechselstrom mit Frequenzen zwischen etwa 100 Hz und 100 kHz an eine Sendespule angelegt und das Magnetfeld mit einer zweiten Spule in einem bestimmten Abstand und Winkel zur Sendespule gemessen. Das gemessene Magnetfeld beinhaltet das Feld der Sendespule sowie ein sekundäres Magnetfeld, das von induzierten Strömen im Untersuchungsmedium hervorgerufen wird. Für die Messung der Bodenleitfähigkeit ist das zuletzt genannte sekundäre Magnetfeld ausschlaggebend. Die Schwierigkeit liegt darin, dass dem Sekundärfeldanteil an der Empfängerspule der Primärfeldanteil überlagert ist, wobei das Primärfeld mehrere Größenordnungen größer ist als das Sekundärfeld und das Primärfeld temperaturbedingten Driften unterworfen ist. Zur Lösung dieses Problems werden verschiedene Ansätze verfolgt: (1) Der Einsatz von Kompensationsspulen, die mit der Primärspule verbunden sind und die das Primärfeld an der Empfangsspule kompensieren (US 6,710,599; Canadian Patent 2,142,546; US 7,759,941); (2) analoge Kompensationsschaltungen, die über temperaturabhängige Bauteile Temperaturdriften entgegenregeln (EM31 von Geonics Limited, Mississauga, Ontario, Canada[1]) und/oder (3) vom Hersteller für das Gerät bestimmte Temperatur-Korrekturtabellen, die mit Hilfe von unabhängigen, im Gerät eingebauten Temperatursensoren nachträglich auf die Messdaten angewendet werden können (US 6,710,599; US 7,759,941). DE 10 2009 026403 offenbart ein Verfahren zur Messung der elektrischen Leitfähigkeit eines Mediums. DE 38 87 336 offenbart ein Verfahren zur Messung der elektrischen Leitfähigkeit von Bodenformationen.

[1] Angabe aus Quelle: US 6,710,599

Abhängig von der verwendeten Kompensationsmethode ergeben sich unterschiedliche Nachteile: Bei (1) muss bedacht werden, dass die Kompensationsspule eine weitere Fehlerquelle für Driften darstellt. Mit (2) können nur eingeschränkt Effekte kompensiert werden. Beide Methoden bedürfen daher in der Regel einer zusätzlichen Kalibrierung unter Messbedingungen (im Feld), die der Anwender durchführen muss und die aufgrund der analogen Komponenten zu nicht reproduzierbaren Ergebnissen führt. Der Ansatz (3) umgeht die genannten Nachteile der analogen Driftkorrektur von (2) und ermöglicht die Korrektur nichtlinearer Driften. Die Korrekturparameter werden gespeichert und ermöglichen daher eine bessere Kontrolle der Korrektur. Allerdings basiert die Methode auf der genauen Bestimmung der Temperatur in direkter Umgebung der Spulen sowie der aufwendigen Bestimmung von Korrekturparametern auf Basis von vielen Messungen. Des Weiteren können Driften, die zum Zeitpunkt der Messung der genannten Referenztabellen nicht auftraten, nicht kompensiert werden.

Aufgabe und Lösung

Es ist daher die Aufgabe der Erfindung, ein Verfahren zur elektromagnetischen Messung der Leitfähigkeit eines Mediums zur Verfügung zu stellen, bei dem der Einfluss einer temperaturabhängigen Drift des Primärfeldes bzw. der Spulenparameter auf das Messergebnis besser unterdrückt ist als nach dem bisherigen Stand der Technik.

Diese Aufgabe wird erfindungsgemäß gelöst durch ein Verfahren gemäß Hauptanspruch. Weitere vorteilhafte Ausgestaltungen ergeben sich aus den darauf rückbezogenen Unteransprüchen.

Gegenstand der Erfindung

Im Rahmen der Erfindung wurde ein Verfahren zur Messung der elektrischen Leitfähigkeit eines Mediums entwickelt. Dabei wird das Medium durch eine Sendespule mit einem magnetischen Wechselfeld (Primärfeld) beaufschlagt, so dass im Medium Ströme induziert werden und ein weiteres magnetisches Wechselfeld (Sekundärfeld) ausbilden, wobei das Sekundärfeld mit einer Empfangsspule gemessen und hieraus die Leitfähigkeit des Mediums ausgewertet wird.

Erfindungsgemäß wird das Primärfeld am Ort der Sendespule direkt oder indirekt gemessen und hieraus der Beitrag des Primärfeldes zum Feld am Ort der Empfangsspule ausgewertet.

Dabei kann das zu untersuchende Medium insbesondere halbräumig an die Messapparatur angrenzen. Es kann beispielsweise der Erdboden sein. Zum Einsatz kommen in diesem Fall Messfrequenzen in der Größenordnung von 1 Hz bis 100 kHz und Anregungsspannungen bis 50 V. Empfangs- und Sendespulen befinden sich in einem Abstand von 0,1 m bis 10 m. Abhängig von den gerade genannten Parametern beträgt der von der Sendespule hervorgerufene magnetische Fluss durch die Empfangsspule zwischen 1 pT und 1 μT. Das durch das Primärfeld induzierte und gegenüber diesem phasenverschobene Sekundärfeld des halbräumig angrenzenden Mediums beträgt weniger als ein zehntausendstel des Primärfeldes, insbesondere weniger als 10 fT. Bei einem schlechten Leiter, wie beispielsweise einem Boden, ist die Phasenverschiebung zwischen Primärfeld und Sekundärfeld genau 90°. In Abhängigkeit von der Leitfähigkeit des Bodens resultiert eine Phasenverschiebung des Gesamtfeldes von 1 μrad bis 10 mrad. Diese Phasenverschiebung wird gemessen. In der Regel wird über diese Phasenverschiebung das Sekundärfeld gemessen.

Die Verwendung von unterschiedlichen Orientierungen der Spulen zueinander und zu dem angrenzenden Medium beeinflusst die Feldverteilung im Untersuchungsmedium. Zum Einsatz kommen beispielsweise die sogenannte horizontale komplanare (HCP) und vertikale komplanare (VCP) Anordnung der Spulen, sowie rechtwinklig zueinander angeordnete Spulen (PRP). Bei gleichem Spulenabstand misst die HCP-Anordnung in einem tiefer liegenden Messgebiet als die VCP-Anordnung. Die PRP-Konfiguration hat eine ähnliche Feldverteilung wie VCP, hat aber den Vorteil, dass sie sich zusammen mit einer HCP-Konfiguration mit insgesamt nur drei anstatt vier Spulen realisieren lässt. Zusätzlich vergrößert sich die Messtiefe mit dem Abstand zwischen Sende- und Empfangsspule. Grundsätzlich gilt, mit je mehr unterschiedlichen Konfigurationen an einem Ort gemessen wird umso genauer ist die Leitfähigkeitsverteilung im Medium über die Tiefe bestimmbar. Für die genannten Spulenabstände und Orientierungen derselben ergeben sich Rückschlüsse auf die Leitfähigkeit eines Erdbodens bis etwa zu einer Tiefe von 10 m.

Es wurde erkannt, dass sich auf Grund des Superpositionsprinzips die Beiträge des Primärfeldes und des Sekundärfeldes zum gesamten Feld am Ort der Sekundärspule störungsfrei überlagern. Die in der Sekundärspule induzierte Spannung, die als Messsignal dient, hängt linear von diesem gesamten Feld ab. Daher kann der Beitrag des Primärfeldes aus diesem Messsignal herauskorrigiert werden, wenn das Primärfeld am Ort der Sendespule und die räumliche Anordnung von Sende- und Empfangsspule zueinander bekannt sind.

Fällt das Primärfeld auf diese Weise vollständig aus dem letztendlich erhaltenen Messsignal heraus, wirken sich auch temperaturbedingte Driften des Primärfeldes nicht mehr auf das Endergebnis aus. In gleicher Weise werden auch die Driften des Messsignals der Sekundärspule korrigiert.

Diese Art der Driftkorrektur ist deutlich genauer und reproduzierbarer als die aus dem Stand der Technik bekannten rein phänomenologischen Driftkorrekturen mit analogen Kompensationsschaltungen, die temperaturabhängige Bauteile beinhalten, oder mit nachträglich angewendeten Korrekturtabellen. Die erfindungsgemäße Korrektur ist frei von Annahmen über den Durchgriff von Temperaturschwankungen auf das Primärfeld. Da keine analoge Kompensation des Primärfeldes am Ort der Empfangsspule mittels zusätzlicher Spule verwendet wird, die den gleichen temperaturbedingten Driften unterworfen wäre wie die Sendespule, werden diese driftbedingten Fehler, im Gegensatz zur ebenfalls aus dem Stand der Technik bekannten Methode, im Ansatz schon vermieden.

Das Primärfeld am Ort der Sendespule kann direkt gemessen werden, beispielsweise mit einem Magnetowiderstandssensor und hier insbesondere mit einem AMR-Sensor. In einer besonders vorteilhaften Ausgestaltung der Erfindung wird es jedoch indirekt gemessen.

Es wurde erkannt, dass eine Betrachtung der Sendespule als reine Induktivität zu kurz greift. Vielmehr ist die Sendespule als RLC-Kreis zu sehen, in dem die Induktivität $L1$ mit einem ohmschen Widerstand $R1$ in Reihe geschaltet ist; diese Reihenschaltung wiederum ist parallel mit der Kapazität $C1$ geschaltet. Ein durch die Spule fließender Wechselstrom teilt sich somit auf die Induktivität $L1$ und auf die Kapazität $C1$ auf. Das Teilungsverhältnis hängt davon ab, in welchem Verhältnis die Impedanz der Kapazität $C1$ zur Summe der Impedanzen von Induktivität $L1$ und ohmschem Widerstand $R1$ steht. Indem nun $R1$, $C1$ und $L1$ sämtlich temperaturabhängig sind, kann der Strom durch die Induktivität $L1$ und damit auch das Primärfeld schwanken, auch wenn sich der insgesamt durch die Spule fließende Strom nicht ändert. $R1$ ist am stärksten temperaturabhängig. $L1$ kann in erster Näherung ggfs. als konstant angenommen werden.

Daher werden zur indirekten Messung des Primärfelds am Ort der Sendespule vorteilhaft die über der Sendespule abfallende Spannung sowie die Induktivität, der ohmsche Widerstand und/oder die Kapazität der Sendespule gemessen. Diese Messungen können jeweils entweder direkt oder indirekt erfolgen. Sind all diese Größen bekannt, ist auch der Strom durch die Induktivität $L1$ bekannt. Bei bekannter Geometrie der Sendespule liegen damit Stärke und Verteilung des Primärfeldes im Raum fest.

In einer weiteren vorteilhaften Ausgestaltung der Erfindung werden zusätzlich der ohmsche Widerstand $R2$, die Kapazität $C2$ und/oder die Induktivität $L2$ der Empfangsspule gemessen, und es wird hieraus das elektrische Signal berechnet, das die Empfangsspule auf Grund des Beitrags des Primärfeldes zum Feld am Ort der Empfangsspule liefert.

Es wurde erkannt, dass die Umsetzung des magnetischen Flusses, der die Empfangsspule durchsetzt, in ein an der Empfangsspule abgreifbares elektrisches Signal qualitativ in gleicher Weise temperaturabhängig ist wie die Umsetzung des durch die Sendespule fließenden Stroms in ein Primärfeld. Das an der Empfangsspule abgreifbare Signal hängt also nicht nur vom magnetischen Fluss am Ort der Empfangsspule ab, sondern auch von ohmschem Widerstand $R2$, Kapazität $C2$ und Induktivität $L2$ der Empfangsspule. Indem durch die Messung der genannten Größen die Übertragungsfunktion der Empfangsspule, die das Wechselfeld auf die Spannung abbildet, erschlossen wird, ist zum Einen der Beitrag bekannt, den das Primärfeld zur insgesamt an der Empfangsspule abgreifbaren Spannung leistet. Zum Anderen kann auch der Einfluss temperaturabhängiger Driften der Empfangsspule auf die Messung des Sekundärfeldes erkannt und aus dem Messergebnis herauskorrigiert werden.

In einer besonders vorteilhaften Ausgestaltung der Erfindung werden die Induktivität, der ohmsche Widerstand und/oder die Kapazität der Sende- und/oder Empfangsspule gemessen, indem die Spule mit mindestens zwei verschiedenen Frequenzen, bevorzugt mit mindestens drei verschiedenen Frequenzen, angeregt wird und jeweils der durch die Spule fließende Strom sowie die über der Spule abfallende Spannung gemessen werden. Der Quotient aus Strom und Spannung ist für jede Anregungsfrequenz der Wechselstromwiderstand (Impedanz) der Spule, der sich aus den Beiträgen von Induktivität L, Kapazität C und ohmschem Widerstand R zusammensetzt. Das Ohmsche Gesetz führt also auf eine Gleichung, die neben Spannung, Strom und Anregungsfrequenz die Unbekannten L, C und R enthält. Wird zur Vereinfachung die Induktivität L als konstant angenommen, können durch eine Anregung mit zwei verschiedenen Anregungsfrequenzen, die zwei nicht linear abhängige Gleichungen liefern, die beiden anderen Größen bestimmt werden. Sollen alle drei Größen bestimmt werden, sind mindestens drei verschiedene Anregungsfrequenzen erforderlich. Da das Gleichungssystem nichtlinear ist, ist es in aller Regel nicht analytisch lösbar. Die Lösung wird näherungsweise mittels numerischer Verfahren, beispielsweise mit der Methode der kleinsten Fehlerquadratsumme, berechnet.

Auf diese Weise werden bei jeder spektralen Messung implizit die Spulenparameter mitgemessen bzw. berechnet. Die Messung der Empfangsspulenparameter erfordert eine zusätzliche spektrale Messung, die in Abhängigkeit der Messbedingungen, bzw. der benötigten Messgenauigkeit und der geforderten Messfortschrittsgeschwindigkeit zur Driftkorrektur durchgeführt wird.

In einer weiteren vorteilhaften Ausgestaltung der Erfindung wird die Sendespule in einzelne Leiterstücke untergliedert, und es wird für jedes dieser Leiterstücke separat ermittelt, welchen Beitrag das von diesem Leiterstück erzeugte Primärfeld zum Feld am Ort der Empfangsspule leistet. Damit können insbesondere Randeffekte nicht unendlich langer Spulen sowie andere Abweichungen von der perfekten Zylinderform in die Ermittlung des Primärfeldes am Ort der Empfängerspule eingehen. Die ortsabhängige magnetische Flussdichte, die durch ein jedes Leiterstück erzeugt wird, kann beispielsweise numerisch berechnet werden. Vorteilhaft wird das Magnetfeld am Ort der Sende- und/oder Empfangsspule mit einem Magnetowiderstandssensor, insbesondere einem AMR-Sensor, gemessen. Eine Messung am Ort der Sendespule kann die indirekte Messung des Magnetfelds ergänzen oder ersetzen. Eine Messung am Ort der Empfangsspule mit AMR-Sensoren ist deutlich breitbandiger mit geringeren Phasenvariationen und damit auch geringeren Phasenfehlern als die Messung mit der eigentlichen Empfangsspule. Ergeben sich zwischen der Messung mit der Empfangsspule und der Messung mit dem Magnetowiderstandssensor systematische Abweichungen, kann hieraus auf das Vorhandensein von Störungen geschlossen werden. Dann kann beispielsweise eine Driftmessung der Spulenparameter durchgeführt und die Berechnung des Primärfeldes am Ort der Empfangsspule um diese Drift korrigiert werden. Alternativ oder auch in Kombination hierzu können bei hinreichender Sensitivität des Magnetowiderstandssensors vorteilhaft der ohmsche Widerstand, die Kapazität und/oder die Induktivität der Empfangsspule aus dem mittels Magnetowiderstandssensor bestimmten Magnetfeld und dem von der Empfangsspule aus diesem Magnetfeld generierten elektrischen Signal ausgewertet werden.

Vorteilhaft wird die über der Sendespule abfallende Spannung durch Resonanz über die Amplitude der Spannung, die der Sendespule zugeführt wird, hinaus angeregt. Auf diese Weise kann ein besonders intensives Primärfeld erzeugt werden, ohne dass die verwendete Wechselspannungsquelle in der Lage sein muss, Hochspannung zu liefern. Die Spulen sollten jedoch zumindest eine so breitbandige Anregung zulassen, dass eine Anregung mit mehreren Frequenzen $\omega$ zur Bestimmung der Spulenparameter möglich ist. Grundsätzlich gilt, je breitbandiger die Anregung durch die Spulen ermöglicht wird, umso größerer ist der Frequenzbereich, in dem die komplexe elektrische Leitfähigkeit und damit das Medium untersucht werden können.

In einer besonders vorteilhaften Ausgestaltung der Erfindung wird die Leitfähigkeit des Mediums aus dem Imaginärteil des Verhältnisses zwischen den Beiträgen des Sekundärfelds und des Primärfelds am Ort der Empfangs-

$$\left( \beta = \sqrt{\frac{\omega \mu_0 \sigma s^2}{2}} << 1 \right)$$

spule ausgewertet. Diese Näherung ist für kleine Induktionszahlen                gültig, wobei die Induktionszahl proportional zur Quadratwurzel der Messfrequenz $\omega$ und der spezifischen Leitfähigkeit $\sigma$ sowie proportional zum Abstand s zwischen Sende- und Empfangsspule ist, $\mu_0$ ist die Vakuumpermeabilität. Das Verhältnis der Feldbeiträge entspricht dem Verhältnis der Spannungen, die auf Grund des Sekundär- bzw. des Primärfelds in der Empfangsspule induziert werden, und damit auch dem Verhältnis der Impedanzen für die Induktion einer Spannung U2 in der Empfangsspule durch einen Strom I1 in der Induktivität L1 mit bzw. ohne Beteiligung des zu untersuchenden Mediums. Aus diesem Verhältnis fällt der Strom I1 in der Induktivität L1 heraus, so dass die ermittelte Leitfähigkeit des Mediums von einer Drift dieses Stroms unabhängig ist.

Das Messsystem zeichnet sich durch einen Signalgenerator für die spektrale breitbandige Anregung (gleichzeitig oder sequenziell), einen Multiplexer (Relais) zur Umschaltung zwischen Anregungsmodus mit Parameterbestimmung und Empfangsmodus, hochgenaue Shunt-Widerstände zur Messung des Anregungsstromes, hochohmige Verstärker zur Messung der Spannung über dem Shunt-Widerstand und der Spannung an der Empfangsspule und synchronisierte hochauflösende schnelle Analog-Digital-Wandler (ADC) mit hoher Phasengenauigkeit zur Messung im Zeitbereich aus. Zur Steuerung der Messung, zur Aufzeichnung und zur Auswertung wird ein PC verwendet.

Die Sende- und Empfangsspulen können insbesondere Luftspulen sein. Luftspulen haben gegenüber Spulen mit magnetisch permeablen Kernen den Vorteil, dass die Luft das Magnetfeld nicht beeinflusst und daher auch keine Quelle für Driften oder Nichtlinearitäten des Systems darstellt. Typischerweise wird die Sendespule mit relativ wenigen Windungen gewickelt um den ohmschen Widerstand zu minimieren (beispielsweise D = 70 mm, I = 10 mm, h = 10 mm, n = 200 Windungen). D ist der Durchmesser der Spule, I und h sind die beiden Dimensionen ihres rechteckigen Querschnitts. Für die Empfangsspule kommen typischerweise flache Spulen mit relativ vielen Windungen zum Einsatz (beispielsweise D = 70 mm, I = 10 mm, h = 10 mm, n = 700 Windungen). Es können jeweils mehr als eine Spule als Sende- und Empfangsspule verwendet werden, wobei der Abstand zwischen Sende- und Empfangsspule nicht mehr als 4 m betragen sollte.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1: Schaltbild einer Vorrichtung zur Durchführung des Verfahrens.
Figur 2: Skizze verschiedener Anordnungen von Sende- und Empfangsspule.

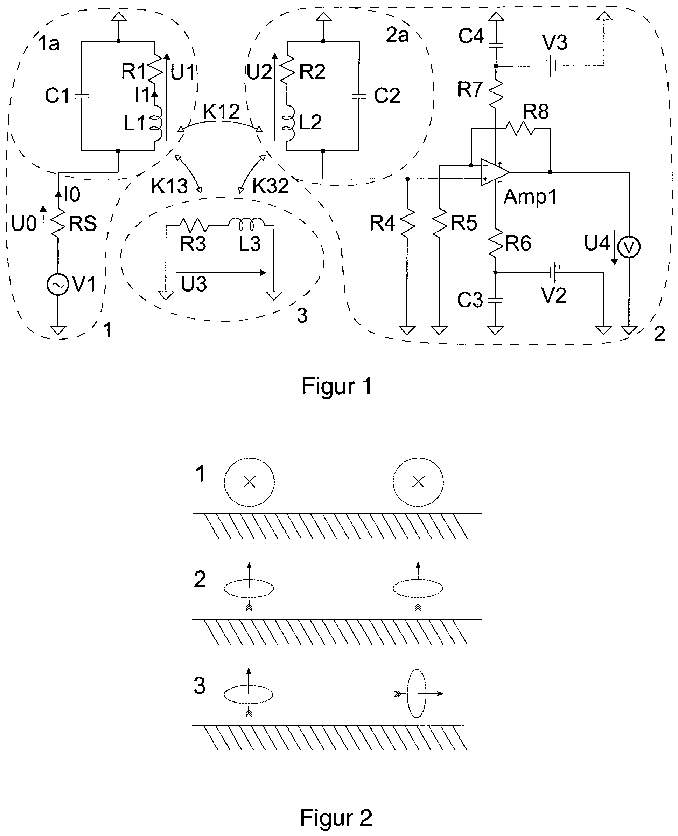

Figur 1 zeigt das Schaltbild einer Vorrichtung zur Durchführung des erfindungsgemäßen Verfahrens. Die Vorrichtung ist in den Sender 1 und den Empfänger 2 untergliedert. Zu untersuchen ist die Leitfähigkeit eines Mediums 3.

Der Sender 1 umfasst eine Wechselspannungsquelle V1, deren Frequenz $\omega$ durchstimmbar ist. Über die am Shuntwiderstand RS abfallende Spannung U0 wird der durch die Sendespule 1a fließende Strom gemessen. Gleichzeitig wird die über der Sendespule 1a abfallende Spannung U1 gemessen. Die Sendespule 1a ist als ihr Ersatzschaltbild aus idealer Induktivität L1, idealem ohmschem Widerstand R1 und idealer Kapazität C1 dargestellt. R1 und L1 sind in Reihe geschaltet, und C1 ist zu dieser Reihenschaltung parallel geschaltet.

Der durch die Induktivität L1 fließende Strom I1 bestimmt das von der Sendespule erzeugte Magnetfeld B. Nach dem Ohmschen Gesetz gilt

$$B \sim I1 = \frac{U1}{R1 + i\omega L1}$$

Die komplexe Impedanz Z1 der Sendespule setzt sich aus den Beiträgen von R1, L1 und C2 zusammen:

$$Z1 = \frac{U1}{I0} = \frac{1}{\dfrac{1}{R1 + i\omega \cdot L1} + i\omega \cdot C1}$$

Werden U1 und I0 für eine bestimmte Frequenz $\omega$ gemessen, wird hieraus eine Gleichung, in der R1, L1 und C1 die Unbekannten sind. Wird die gleiche Messung für weitere Frequenzen $\omega$ durchgeführt, werden weitere derartige Gleichungen aufgestellt. Messungen für drei oder mehr Frequenzen $\omega$ ermöglichen die Bestimmung der Unbekannten mittels numerischer Näherungsverfahren.

Der Empfänger umfasst die Empfangsspule 2a, die als ihr Ersatzschaltbild aus idealer Induktivität L2, idealem ohmschem Widerstand R2 und idealer Kapazität C2 dargestellt ist. An der Empfangsspule ist eine Spannung U2 abgreifbar. Diese ist das Eingangssignal für einen Operationsverstärker Amp1, der durch den Spannungsteiler aus den Widerständen R8 und R5 als nichtinvertierender Verstärker beschaltet ist. Zur Vermeidung von ungewollten Schwingungen wird die Spule mit dem hochohmigen Widerstand R4 gegen Masse belastet. Der Verstärker Amp1 wird durch eine positive Gleichspannungsquelle V3 und eine negative Gleichspannungsquelle V2 mit Betriebsspannung versorgt. Unerwünschte Wechselspannungsanteile in der Versorgungsspannung werden durch die Koppelkondensatoren C3 und C4 nach Masse abgeleitet und/oder durch die Widerstände R6 und R7 dissipiert. Das Ausgangssignal des Verstärkers Amp1 wird mit dem Voltmeter U4 gemessen.

Über eine Relaisschaltung lässt sich die Empfangsspule 2a an die Stelle der Sendespule 1a schalten. Auf diese Weise können auch die Kenngrößen R2, L2 und C2 der Empfangsspule 2a durch mehrere Messungen von U2 und I0 und Aufstellen eines Gleichungssystems bestimmt werden, analog zur Charakterisierung der Sendespule 1a.

Das zu untersuchende Medium 3 ist als sein Ersatzschaltbild aus idealer Induktivität L3 und idealem ohmschem Widerstand R3 dargestellt. Das Primärfeld induziert eine Spannung U3, die gegeben ist durch

$$U3 = I1 \cdot i\omega \cdot K13,$$

worin K13 der Kopplungsfaktor zwischen Sender 1 und Medium 3 ist. U3 bewirkt innerhalb des Mediums 3 einen Stromfluss I3, der nach dem Ohmschen Gesetz gegeben ist durch

$$I3 = \frac{U3}{Z3}, \text{ mit } Z3 = R3 + i\omega \cdot L3$$

Z3 ist der komplexe Wechselstromwiderstand (Impedanz) des Mediums.

Dieser Stromfluss erzeugt das Sekundärfeld, das in die Empfangsspule 2a einkoppelt und dort eine Spannung

$$U2_s = I3 \cdot i\omega \cdot K32$$

induziert, worin K32 der Kopplungsfaktor zwischen Medium 3 und Empfangsspule 2 ist. Dieser Kopplung lässt sich ebenfalls ein komplexer Wechselstromwiderstand (Impedanz) $Z2_s$ zuordnen:

$$Z2_s = \frac{U2_s}{I1}$$

Gleichzeitig induziert das Primärfeld in der Empfangsspule 2a eine um mehrere Größenordnungen höhere Spannung

$$U2_p = I1 \cdot i\omega \cdot K12$$

worin K12 der direkte Kopplungsfaktor zwischen Sende- und Empfangsspule ist. Dieser Kopplungsfaktor ist gegeben durch

$$K_{12} = \frac{\mu_0}{2 \cdot \pi \cdot r^3} \cdot N_1 \cdot N_2 \cdot \frac{N_1 \cdot I_1 \cdot A_1 \cdot A_2}{I_1 \cdot N_1} \cdot \frac{1}{\sqrt{L_1 \cdot L_2}} = \frac{\mu_0}{2 \cdot \pi \cdot r^3} \cdot N_1 \cdot N_2 \cdot \frac{A_1 \cdot A_2}{\sqrt{L_1 \cdot L_2}} \cdot$$

Er ist also proportional zum Produkt der Windungszahlen $N_1$ und $N_2$ von Sende- und Empfangsspule sowie zum Produkt der Querschnittsflächen $A_1$ und $A_2$ von Sende- und Empfangsspule und nimmt auf Grund der Näherung, dass die Sendespule ein magnetischer Dipol ist, mit dem Abstand r zwischen beiden Spulen zu $1/r^3$ ab. Durch Normierung auf den Strom durch die Sendespule I1 ergibt sich die der Wechselstromwiderstand (Impedanz) $Z2_p$ für die direkte Kopplung zwischen Sendespule 1a und Empfangsspule 2a ohne Vermittlung durch das Medium zu

$$Z2p = \frac{U2p}{I1}, \text{ mit } I1 = \left( \frac{U1}{R1 + i\omega L1} \right) \cdot$$

Die Wechselstromwiderstände $Z2_{s,p}$ ergeben sich für ideale Spulen aus dem Induktionsgesetz und enthalten daher ausschließlich Konstanten, Geometriefaktoren und die Sendefrequenz:

$$Z2_{s,p} = \frac{U2_{s,p}}{I_1} = \frac{N_2 \frac{d}{dt}\Phi}{I_1} = \frac{N_2 \frac{d}{dt}\int_A B\,dA}{I_1} = \frac{N_2 \frac{\mu_0}{2\pi} \frac{N_1 A_1 A_2}{r^3} i\omega I_1}{I_1} = \frac{\mu_0}{2\pi} \frac{N_2 N_1 A_1 A_2}{r^3} i\omega$$

Die letztendlich interessierende Messgröße ist die sogenannte "scheinbare Leitfähigkeit" des Mediums, welche mit einem Zweispulensystem anhand einer einzelnen Messung bestimmt werden kann und die Leitfähigkeit eines halbräumig angrenzenden Mediums unter Annahme einer homogenen Leitfähigkeitsverteilung angibt. Für die horizontale (HCP) und die vertikale (VCP) komplanare Spulenanordnung hängen scheinbare Leitfähigkeit $\sigma_a$ und das gemessene Impedanz Z wie folgt zusammen (Wait, J.R., Geo-Electromagnetism, Academic Press Inc. New York, 1982):

$$\left(\frac{Z}{Z_0}\right)^{HCP}(s,\gamma) = \frac{2}{\gamma^2 s^2}\left[9 - e^{-\gamma s}\left(9 + 9\gamma s + 4\gamma^2 s^2 + \gamma^3 s^3\right)\right],$$

$$\left(\frac{Z}{Z_0}\right)^{VCP}(s,\gamma) = -\frac{2}{\gamma^2 s^2}\left[3 - \gamma^2 s^2 - e^{-\gamma s}\left(3 + 3\gamma s + \gamma^2 s^2\right)\right],$$

mit $\gamma = \sqrt{i\omega\mu_0(\sigma_a + i\omega\varepsilon)}$, dem Spulenabstand s und der Referenzimpedanz ohne Sekundärfeld $Z_0$.

Für kleine Induktionszahlen fand McNeill (McNeill, J.D.; Electromagnetic terrain conductivity measurement at low induction numbers. Technical note TN-6, Geonics Ltd, 1980) eine lineare Abhängigkeit zwischen scheinbarer Leitfähigkeit $\sigma_a$ und der über den Boden in die Empfängerspule induzierte sekundären magnetischen Feldstärke $H_s$:

$$\sigma_a = \frac{4}{\omega\mu_0 s}\mathrm{imag}\left(\frac{H_s}{H_p}\right),$$

wobei $\mu_0$ die magnetische Feldkonstante und s den Spulenabstand bezeichnet und $H_p$ der Beitrag des Primärfeldes zum gesamten Magnetfeld am Ort der Empfangsspule 2a ist. Diese Näherung stellt für die meisten Kombinationen aus Spulenabstand s und Messfrequenz $\omega$ keine Einschränkung dar und vereinfacht die Berechnung. Die Erfindung liefert hier nun die Neuerung, dass für $H_p$ während der gesamten Messung ein verlässlicher Messwert zur Verfügung steht. Nach dem Stand der Technik konnte lediglich vor Beginn der eigentlichen Messung eine Kalibrationsmessung durchgeführt werden, beispielsweise indem das Gerät in die Luft hochgehalten und die dann von der Empfängerspule registrierte Feldstärke als $H_p$ gewertet wurde. Erfindungsgemäß ist genau bestimmbar, welche Beiträge $H_s$ und $H_p$ jeweils zur insgesamt von der Empfängerspule registrierten Feldstärke beitragen, so dass auch das Verhältnis genauer festliegt.

Die Feldstärken können für die Anwendung durch die entsprechenden Transferimpedanzen $Z2_s$, $Z2_p$ ersetzt werden und wir erhalten:

$$\sigma_a = \frac{4}{\omega\mu_0 s}\mathrm{imag}\left(\frac{Z2_s}{Z2_p}\right).$$

Da die sekundäre Transferimpedanz in der Messung nur zusammen mit der primären Transferimpedanz gemessen werden kann, berechnen wir letztere wie oben beschrieben und erhalten auf Basis des Superpositionsprinzips die rein sekundäre Transferimpedanz durch Subtraktion derselben von der gemessenen (Z2):

$$Z2_s = Z2 - Z2_p.$$

Einsetzen ergibt

$$\sigma_a = \frac{4}{\omega\mu_0 s}\mathrm{imag}\left(\frac{Z2}{Z2_p} - 1\right) = \frac{4}{\omega\mu_0 s}\mathrm{imag}\left(\frac{Z2}{Z2_p}\right).$$

Durch die Verwendung von Transferimpedanzen (was einer Normierung auf den Sendespulenstrom I1 entspricht) fällt die Drift des Sendesystems heraus. Eine Drift im Empfangsstromkreis muss gesondert betrachtet werden. Da die Drift sowohl im Zähler, als auch im Nenner der Formel für $\sigma_a$ als Faktor eingeht, fällt diese bei der Berechnung der scheinbaren Leitfähigkeit wieder heraus. Dafür müssen allerdings die Spulenparameter der Empfangsspule gemessen und in der Modellierung berücksichtigt werden. Analog fällt bei der Quotientenbildung in der Formel für $\sigma_a$ auch die Drift der Empfängerspule heraus.

Ein hochpräziser 24-bit Analog-Digital-Wandler (ADC) ermöglicht die simultane Messung von Primär- und Sekundärfeld bzw. der davon induzierten Spannung U2, so dass auf analoge Kompensationssysteme verzichtet werden kann. Um den Dynamikbereich des ADC möglichst optimal auszunutzen, wird das Signal in den gewünschten Spannungsbereich verstärkt.

Figur 2 zeigt verschiedene Anordnungen von Sende- und Empfangsspulen zueinander. Teilbild 1 zeigt vertikale komplanare Schleifen (VCP). Teilbild 2 zeigt horizontale komplanare Schleifen (HCP). Teilbild 3 zeigt eine senkrechte Schleifenanordnung (PRP).

**Patentansprüche**

1. Verfahren zur Messung der elektrischen Leitfähigkeit eines Mediums, wobei das Medium durch eine Sendespule mit einem magnetischen Wechselfeld (Primärfeld) beaufschlagt wird, so dass im Medium Ströme induziert werden und ein weiteres magnetisches Wechselfeld (Sekundärfeld) ausbilden, wobei das Sekundärfeld mit einer Empfangsspule gemessen und hieraus die Leitfähigkeit des Mediums ausgewertet wird, wobei das Primärfeld am Ort der Sendespule direkt oder indirekt gemessen und hieraus der Beitrag des Primärfeldes zum Feld am Ort der Empfangsspule ausgewertet wird, **dadurch gekennzeichnet, dass** die Sendespule in einzelne Leiterstücke untergliedert wird und für jedes dieser Leiterstücke separat ermittelt wird, welchen Beitrag das von diesem Leiterstück erzeugte Primärfeld zum Feld am Ort der Empfangsspule leistet.

2. Verfahren nach Anspruch 1, **dadurch gekennzeichnet, dass** die über der Sendespule abfallende Spannung sowie die Induktivität, der ohmsche Widerstand und/oder die Kapazität der Sendespule gemessen werden und hieraus das von der Sendespule erzeugte Primärfeld bestimmt wird.

3. Verfahren nach Anspruch 2, **dadurch gekennzeichnet, dass** zusätzlich die Induktivität, der ohmsche Widerstand und/oder die Kapazität der Empfangsspule gemessen werden und hieraus das elektrische Signal berechnet wird, das die Empfangsspule auf Grund des Beitrags des Primärfeldes zum Feld am Ort der Empfangsspule liefert.

4. Verfahren nach einem der Ansprüche 2 bis 3, **dadurch gekennzeichnet, dass** die Induktivität, der ohmsche Widerstand und/oder die Kapazität der Sende- und/oder Empfangsspule gemessen werden, indem die Spule mit mindestens zwei verschiedenen Frequenzen, bevorzugt mit mindestens drei verschiedenen Frequenzen, angeregt wird und jeweils der durch die Spule fließende Strom sowie die über der Spule abfallende Spannung gemessen werden.

5. Verfahren nach einem der Ansprüche 1 bis 4, **dadurch gekennzeichnet, dass** das Magnetfeld am Ort der Sende- und/oder Empfangsspule mit einem Magnetowiderstandssensor gemessen wird.

6. Verfahren nach Anspruch 5, **dadurch gekennzeichnet, dass** der ohmsche Widerstand, die Kapazität und/oder die Induktivität der Empfangsspule aus dem mittels Magnetowiderstandssensor bestimmten Magnetfeld und dem von der Empfangsspule aus diesem Magnetfeld generierten elektrischen Signal ausgewertet werden.

7. Verfahren nach einem der Ansprüche 1 bis 6, **dadurch gekennzeichnet, dass** die über der Sendespule abfallende Spannung durch Resonanz über die Amplitude der der Sendespule zugeführten Spannung hinaus angeregt wird.

8. Verfahren nach einem der Ansprüche 1 bis 7, **dadurch gekennzeichnet, dass** die Sendespule mit einem Primärfeld mit einer oder mehreren Frequenzen zwischen 1 Hz und 100 kHz angeregt wird.

**Claims**

1. Method of measuring the electrical conductivity of a medium, wherein the medium is subjected to a magnetic alternating field (primary field) by a transmitting coil so that currents are induced in the medium and constitute a further magnetic alternating field (secondary field), wherein the secondary field is measured with a receiving coil and the conductivity of the medium is evaluated therefrom, wherein the primary field is measured directly or indirectly at the location of the transmitting coil and the contribution of the primary field to the field at the location of the receiving coil is evaluated therefrom, **characterized in that** the transmitting coil is subdivided into individual conductor pieces and it is determined separately for each of these conductor pieces, which contribution the primary field generated by this conductor piece provides to the field at the location of the receiving coil.

2. The method according to claim 1, **characterized in that** the voltage dropping across the transmitting coil and the inductance, the ohmic resistance and/or the capacitance of the transmitting coil are measured and the primary field generated by the transmitting coil is determined therefrom.

3. The method according to claim 2, **characterized in that** the inductance, the ohmic resistance and/or the capacitance of the receiving coil are additionally measured and the electrical signal is calculated therefrom, which supplies the receiving coil based on the contribution of the primary field to the field at the location of the receiving coil.

4. The method of any of claims 2 to 3, **characterized in that** the inductance, the ohmic resistance and/or the capacitance of the transmitting and/or receiving coil are measured by exciting the coil with at least two different frequencies, preferably with at least three different frequencies and, in each case, by measuring the current flowing through the coil as well as the voltage dropping across the coil.

5. The method of any of claims 1 to 4, **characterized in that** the magnetic field is measured with a magnetoresistance sensor at the location of the transmitting and/or receiving coil.

6. The method according to claim 5, **characterized in that** that the ohmic resistance, the capacitance and/or the inductance of the receiving coil are evaluated from the magnetic field determined by means of the magnetoresistance sensor and from the electrical signal generated by the receiving coil from this magnetic field.

7. The method of any of claims 1 to 6, **characterized in that** the voltage dropping across the transmitting coil is excited by resonance beyond the amplitude of the voltage supplied to the transmitting coil.

8. The method of any of claims 1 to 7, **characterized in that** the transmitting coil is excited with a primary field having one or more frequencies between 1 Hz and 100 kHz.

**Revendications**

1. Procédé de mesure de la conductivité électrique d'un milieu, le milieu étant soumis par une bobine d'émission à un champ alternatif magnétique (champ primaire) de manière à induire des courants dans le milieu et à constituer un autre champ alternatif magnétique (champ secondaire), le champ secondaire étant mesuré par une bobine de réception et la conductivité du milieu en étant évaluée, le champ primaire étant mesuré directement ou indirectement à l'emplacement de la bobine d'émission et la contribution du champ primaire au champ à l'emplacement de la bobine de réception en étant évaluée, **caractérisé en ce que** l'on subdivise la bobine d'émission en des pièces conductrices individuelles et on détermine séparément, pour chacune de ces pièces individuelles, la contribution, que le champ primaire produit par cette pièce individuelle, fournit au champ à l'emplacement de la bobine de réception.

2. Procédé suivant la revendication 1, **caractérisé en ce que** l'on mesure la tension chutant aux bornes de la bobine d'émission, ainsi que l'inductance, la résistance ohmique et/ou la capacité de la bobine d'émission et on en détermine le champ primaire produit par la bobine d'émission.

3. Procédé suivant la revendication 2, **caractérisé en ce que** l'on mesure, en outre, l'inductance, la résistance ohmique et/ou la capacité de la bobine de réception et on en calcule le signal électrique que la bobine de réception fournit, sur la base de la contribution du champ primaire, au champ à l'emplacement de la bobine de réception.

4. Procédé suivant l'une des revendications 2 à 3, **caractérisé en ce que** l'on mesure l'inductance, la résistance ohmique et/ou la capacité de la bobine d'émission et/ou de la bobine de réception, en excitant la bobine par au moins deux fréquences différentes, de préférence par au moins trois fréquences différentes, et en mesurant, respectivement, le courant passant dans la bobine, ainsi que la tension chutant aux bornes de la bobine.

5. Procédé suivant l'une des revendications 1 à 4, **caractérisé en ce que** l'on mesure le champ magnétique à l'emplacement de la bobine d'émission et/ou de la bobine de réception par un capteur de magnétorésistance.

**6.** Procédé suivant la revendication 5, **caractérisé en ce que** l'on évalue la résistance ohmique, la capacité et/ou l'inductance de la bobine de réception, à partir du champ magnétique déterminé au moyen du capteur de magnétorésistance et du signal électrique produit par la bobine de réception à partir de ce champ magnétique.

**7.** Procédé suivant l'une des revendications 1 à 6, **caractérisé en ce que** l'on excite la tension chutant aux bornes de la bobine d'émission par résonance, au-delà de l'amplitude de la tension appliquée à la bobine d'émission.

**8.** Procédé suivant l'une des revendications 1 à 7, **caractérisé en ce que** l'on excite la bobine d'émission par un champ primaire ayant une ou plusieurs fréquences entre 1 Hz et 100 kHz.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6710599 B
- CA 2142546
- US 7759941 B
- DE 102009026403
- DE 3887336

**In der Beschreibung aufgeführte Nicht-Patentliteratur**

- **WAIT, J.R.** Geo-Electromagnetism. Academic Press Inc, 1982
- Electromagnetic terrain conductivity measurement at low induction numbers. **MCNEILL, J.D.** Technical note TN-6. Geonics Ltd, 1980